# EUROPEAN PATENT APPLICATION

(11) **EP 4 613 529 A1**
(43) Date of publication of application: **10.09.2025**
(21) Application number: 24162141.6
(22) Date of filing: 07.03.2024
(51) Int. Cl.: B60K 15/03, B60K 15/063, B60K 15/073

(54) **A VEHICLE POWERED BY A HYDROGEN POWER SYSTEM**

(71) Applicant: Volvo Construction Equipment AB, 631 85 Eskilstuna (SE)
(72) Inventor: ÖRKENRUD, Kim, 352 64 Växjö (SE); EKMAN, Gordon, 342 63 Moheda (SE); KVIST, Roland, 363 91 Braås (SE)
(74) Representative: Valea AB

(57) **Abstract**

A vehicle (1) comprising a hydrogen power system for powering the vehicle (1), and a dump box (3) movable between a first position (P1) for receiving load (L) to be carried by the vehicle (1) in an upwardly open first space (4) of the dump box (3), and a second position (P2) in which the dump box (3) is tilted for emptying load from the first space (4) of the dump box (3), wherein the hydrogen power system comprises a hydrogen fuel cell (5) or an internal combustion engine for hydrogen, and a condenser (6) fluidly connected to an exhaust of the hydrogen fuel cell (5) or of the internal combustion engine, wherein the condenser (6) is fluidly connected to the dump box (3) such that water from the condenser (6) is able to accumulate in the dump box (3) when the dump box is in the first position (P1).

## Description

### TECHNICAL FIELD

The disclosure relates generally to vehicles powered by a hydrogen power system powered by gas, for example a hydrogen power system comprising a fuel cell or an internal combustion engine (ICE) for hydrogen. In particular aspects, the disclosure relates to thermal management of the hydrogen power system. The disclosure can be applied to heavy-duty vehicles, such as trucks, comprising a dump box. Although the disclosure may be described with respect to a particular vehicle, the disclosure is not restricted to any particular vehicle.

### BACKGROUND

A hydrogen fuel cell system may be used to provide electric power for powering an electric motor for propulsion of a vehicle. Alternatively, hydrogen gas can be used to power an internal combustion engine delivering a torque for powering the vehicle. In a hydrogen fuel cell, an electrochemical reaction between hydrogen and oxygen produces electric power whilst generating water as a by-product. Also, when hydrogen gas is combusted in an internal combustion engine, water is formed and expelled with the exhaust of the internal combustion engine. When water formed is expelled together with the exhaust gas of the hydrogen power system, fog may form around the vehicle. If many vehicles are operated in a limited space, fog may accumulate and cause reduced visibility around the vehicle(s), thus introducing a safety risk. Accordingly, there is a need to mitigate formation of fog around a hydrogen fuel cell powered vehicle.

### SUMMARY

According to a first aspect of the disclosure, this is achieved by a vehicle according to claim 1. The vehicle comprises a hydrogen power system for powering the vehicle, and a dump box. The dump box is movable between a first position for receiving load to be carried by the vehicle in an upwardly open first space of the dump box, and a second position in which the dump box is tilted for emptying load from the first space of the dump box. The hydrogen power system comprises a hydrogen fuel cell or an internal combustion engine for hydrogen, and a condenser fluidly connected to an exhaust of the hydrogen fuel cell or of the internal combustion engine. The condenser is fluidly connected to the dump box such that water from the condenser is able to accumulate in the dump box when the dump box is in the first position.
When the vehicle is operated using electric power provided by the hydrogen fuel cell, the exhaust gas from the fuel cell contains a lot of moisture. By routing the exhaust gas to a condenser, water is removed from the exhaust gas. The water removed from the exhaust gas is routed to the dump box and temporarily collected in the dump box, thereby mitigating continuous local water spill. Once the dump box is tilted to its second position, normally for emptying load from the dump box, the collected water is poured out of the dump box by gravity.

Optionally in some examples, including in at least one preferred example, the vehicle further comprises a heat pump adapted to move heat from the condenser to a hydrogen tank of the vehicle, said hydrogen tank being adapted to supply hydrogen to the fuel cell or to the internal combustion engine.

Optionally in some examples, including in at least one preferred example, the heat pump comprises a first heat exchanger fluidly connected to a second heat exchanger, said first heat exchanger being provided at the condenser, said second heat exchanger being provided at the tank, and said vehicle further comprising a compressor adapted to circulate fluid between the first heat exchanger and the second heat exchanger.
The heat exchangers enable heat energy to be moved between the heat exchangers by the circulating fluid. This enables heat from the exhausts to be moved to the hydrogen tank of the vehicle.

Optionally in some examples, including in at least one preferred example, the dump box comprises a confined second space separated from the first space, said condenser being fluidly connected to the second space.
The confined space enables collected water to be separated from load carried in the dump box.

Optionally in some examples, including in at least one preferred example, the second space is configured such that when the vehicle is standing on horizontal ground, the second space can hold a predetermined first volume of water when the dump box is in its first position, and configured such that water in said second space is able to flow out of an outlet opening of the second space, at least upon movement of the dump box to the second position. By positioning the outlet opening as claimed, the dump box may be emptied by gravity without use of pumps.

Optionally in some examples, including in at least one preferred example, the outlet opening of the second space is provided with a valve for optionally opening or closing the outlet opening.
By closing the valve, water in the second space will be prevented from flowing through the outlet opening. This enables a lower positioning of the outlet opening, as compared to if no valve would have been provided, instead of leaving the outlet opening open at all times.

Optionally in some examples, including in at least one preferred example, the valve is configured to open in response to movement of the dump box to the second position, wherein movement of the valve is controlled by gravity or by an actuator.
Optionally in some examples, including in at least one preferred example, the actuator is controlled by an electronic sensor or an electronic switch configured to detect a position of the dump box such as the first position or the second position, or any position between the first position and the second position.

Optionally in some examples, including in at least one preferred example, the vehicle may further comprise a human-machine interface, such as s graphical user interface, a button or a switch, said human-machine interface being adapted to receive a user input and to control the valve based on the user input.

Optionally in some examples, including in at least one preferred example, the vehicle may further comprise a water level sensor adapted to determine a water level in the dump box, adapted to provide a water level signal to a computer system, to a visual indicator, or to an audible indicator such as a speaker or a horn.

Optionally in some examples, including in at least one preferred example, said provision of the water level signal being made in response to the water level exceeding a predetermined water level.

Optionally in some examples, including in at least one preferred example, the vehicle is a construction vehicle.

Optionally in some examples, including in at least one preferred example, the construction vehicle is a dump truck.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Fig. 1 show a first embodiment of a vehicle comprising a dump box in which water is collected in the same compartment as load carried in the dump box. Fig. 1 shows the dump box in a first position for receiving load.
Fig. 2 show the vehicle also shown in fig. 1, however with the dump box in a second position tilted for emptying load and water from the dump box.
Fig. 3 shows an alternative embodiment of the vehicle differing from the embodiment of figs. 1 and 2 in that the dump box comprises a confined second space separated from the first space, said condenser being fluidly connected to the second space.

### DETAILED DESCRIPTION

The detailed description set forth below provides information and examples of the disclosed technology with sufficient detail to enable those skilled in the art to practice the disclosure.

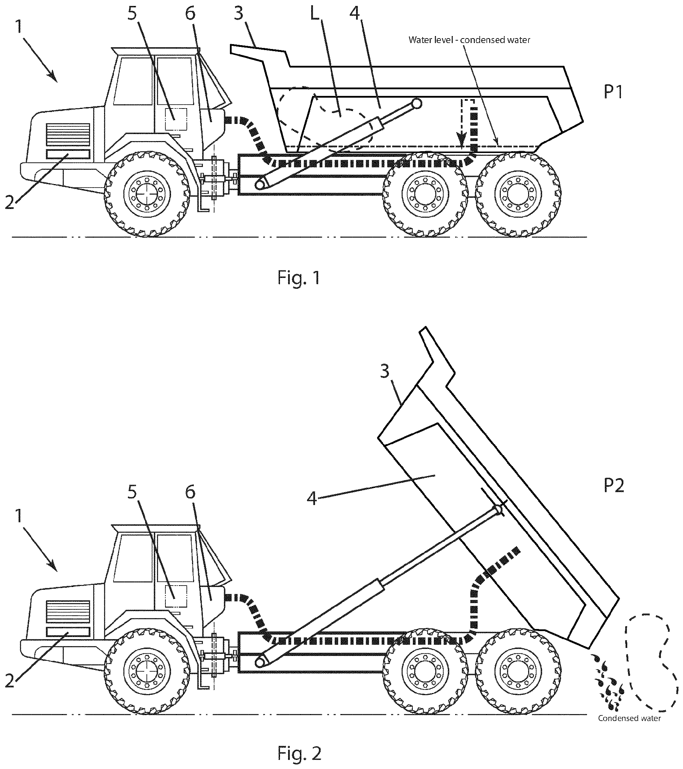

As shown in figs. 1-2, a vehicle 1 according to a first embodiment comprises a hydrogen power system for powering the vehicle 1, and a dump box 3. The dump box 3 is movable between a first position P1 (fig. 1) for receiving load L to be carried by the vehicle 1 in an upwardly open first space 4 of the dump box 3, and a second position P2 (fig. 2) in which the dump box 3 is tilted for emptying load L from the first space 4 of the dump box 3.

The hydrogen power system comprises a hydrogen fuel cell or an internal combustion engine for hydrogen, and a condenser fluidly connected to an exhaust of the hydrogen fuel cell or of the internal combustion engine. The condenser is fluidly connected to the dump box 3 such that water from the condenser is able to accumulate in the dump box 3 when the dump box 3 is in the first position P1.

When the vehicle 1 is operated using electric power provided by the hydrogen fuel cell or using torque provided by the internal combustion engine for hydrogen, the exhaust gas from the fuel cell or from the internal combustion engine contains a lot of moisture. By routing the exhaust gas to a condenser, water is removed from the exhaust gas. The water removed from the exhaust gas is routed to the dump box 3 and temporarily collected in the dump box 3, thereby mitigating continuous local water spill. Once the dump box 3 is tilted to its second position P2, normally for emptying load L from the dump box 3, the collected water is poured out of the dump box 3 by gravity.

The condenser may have any suitable design. For example, the condenser may comprise a first heat exchanger fluidly connected to a second heat exchanger. The second heat exchanger may be provided in a hydrogen tank of the vehicle. When equipped with heat exchangers, the vehicle 1 further comprises a compressor adapted to circulate a fluid between the first heat exchanger and the second heat exchanger. If a compressor is used, it is implemented to form a heat pump together with the first and second heat exchangers.

The heat exchangers enable heat energy to be moved between the heat exchangers by the circulating fluid. This enables heat from the exhausts to be moved to the hydrogen tank. Also, if the fuel tank is cold, for example due to expansion of compressed hydrogen gas, the circulating fluid will be cooled before being led back to the heat exchanger of the condenser where it condenses water in the exhaust gas.

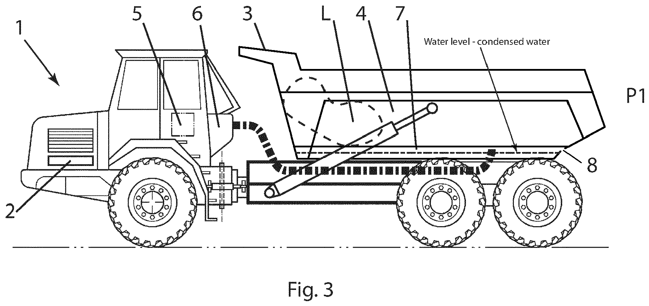

As mentioned above, fig. 3 shows a vehicle 1 similar to the one shown in figs. 1-2 but with an alternative embodiment of the dump box 3. The alternative dump box 3 comprises a confined second space 7 separated from the first space 4. In this embodiment, the condenser is fluidly connected to the second space 7, either by a fluid conduit emanating directly into the second space 7, or indirectly by a fluid conduit emanating into the first space 4, wherein fluid passages are provided between the first space 4 and the second space 7.

The confined space enables collected water to be separated from load L carried in the dump box 3.

The second space 7 may be configured such that when the vehicle 1 is standing on horizontal ground, the second space 7 can hold a predetermined first volume of water when the dump box 3 is in its first position P1. Typically, this is achieved by providing a lower portion of the dump box 3 with a circumferential wall such that the bottom volume is able to contain the predetermined volume of water. Hence, addition of more water leads to water overflowing the circumferential wall.

As shown in the embodiments of figs. 1-3, the wall is typically lower at a back portion of the dump box 3 in order to enable water and objects carried in the dump box 3 to 'overflow' there upon tilting of the dump box 3 as shown in fig. 2.

The dump box 3 may further be provided with an outlet opening configured such that water in said second space 7 is able to flow out the outlet opening of the second space 7, at least upon movement of the dump box 3 to the second position P2.

Accordingly, the dump box 3 may be emptied through the outlet opening by gravity without use of pumps. Tilting the dump box 3 is an efficient way of changing the water surface level such that water is able to flow through the outlet opening, thereby emptying water from the dump box 3.

The outlet opening of the second space 7 may be provided with a valve for optionally opening or closing the outlet opening.

By closing the valve, water in the second space 7 will be prevented from flowing through the outlet opening. This enables a lower positioning of the outlet opening, as compared to if no valve would have been provided, since the valve prevents water from escaping through the outlet opening instead of leaving the outlet opening open at all times, which would lead to uncontrolled spill.

The valve may be configured to open in response to movement of the dump box 3 to the second position P2, wherein movement of the valve is controlled by gravity or by an actuator. Gravity control may for example be achieved using a control arm provided with a weight which keeps the arm vertical as the vehicle 1 rotates, thus changing position of the valve based on the orientation of the vehicle 1 with respect to a vertical axis.

The actuator may be controlled by an electronic sensor or an electronic switch configured to detect a position of the dump box 3 such as the first position P1 or the second position P2, or any position between the first position P1 and the second position P2.

The vehicle 1 may comprise a human-machine interface, such as s graphical user interface, a button or a switch, said human-machine interface being adapted to receive a user input and to control the valve based on the user input.

The vehicle 1 may comprise a water level sensor adapted to determine a water level in the dump box 3, adapted to provide a water level signal to a computer system, to a visual indicator, or to an audible indicator such as a speaker or a horn.

The provision of the water level signal may be made in response to the water level exceeding a predetermined water level.

The vehicle 1 may be a construction vehicle 1, such as a dump truck.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle (1) comprising a hydrogen power system for powering the vehicle (1), and a dump box (3) movable between a first position (P1) for receiving load (L) to be carried by the vehicle (1) in an upwardly open first space (4) of the dump box (3), and a second position (P2) in which the dump box (3) is tilted for emptying load from the first space (4) of the dump box (3),
wherein the hydrogen power system comprises a hydrogen fuel cell (5) or an internal combustion engine for hydrogen, and a condenser (6) fluidly connected to an exhaust of the hydrogen fuel cell (5) or of the internal combustion engine, wherein the condenser (6) is fluidly connected to the dump box (3) such that water from the condenser (6) is able to accumulate in the dump box (3) when the dump box is in the first position (P1).

2. The vehicle (1) of claim 1, wherein the vehicle (1) further comprises a heat pump adapted to move heat from the condenser (6) to a hydrogen tank of the vehicle (1), said hydrogen tank being adapted to supply hydrogen to the fuel cell or to the internal combustion engine.

3. The vehicle (1) of claim 2, wherein the heat pump comprises a first heat exchanger fluidly connected to a second heat exchanger, said first heat exchanger being provided at the condenser, said second heat exchanger being provided at the tank, and said vehicle (1) further comprising a compressor adapted to circulate fluid between the first heat exchanger and the second heat exchanger.

4. The vehicle (1) of the preceding claims, wherein the dump box (3) comprises a confined second space (7) separated from the first space (4), said condenser (6) being fluidly connected to the second space (7).

5. The vehicle (1) according to claim 4, wherein the second space (7) is configured such that when the vehicle (1) is standing on horizontal ground, the second space (7) can hold a predetermined first volume of water when the dump box (3) is in its first position, and configured such that water in said second space (7) is able to flow out of an outlet opening (8) of the second space (7), at least upon movement of the dump box (3) to the second position.

6. The vehicle (1) of claim 5, wherein the outlet opening of the second space (7) is provided with a valve for optionally opening or closing the outlet opening.

7. The vehicle (1) of claim 6, wherein the valve is configured to open in response to movement of the dump box (3) to the second position, wherein movement of the valve is controlled by gravity or by an actuator.

8. The vehicle (1) of claim 7, wherein the actuator is controlled by an electronic sensor or an electronic switch configured to detect a position of the dump box (3) such as the first position or the second position, or any position between the first position and the second position.

9. The vehicle (1) according to any one of claims 6-8, further comprising a human-machine interface, such as s graphical user interface, a button or a switch, said human-machine interface being adapted to receive a user input and to control the valve based on the user input.

10. The vehicle (1) according to any one of the preceding claims, further comprising a water level sensor adapted to determine a water level in the dump box (3), said water level sensor being adapted to provide a water level signal to a computer system, to a visual indicator, or to an audible indicator such as a speaker or a horn.

11. The vehicle (1) according to claim 10, wherein said provision of the water level signal is made in response to the water level exceeding a predetermined water level.

12. The vehicle (1) according to any one of the preceding claims, said vehicle (1) being a construction vehicle.

13. The vehicle (1) according to claim 12, wherein the construction vehicle is a dump truck.
